# EUROPÄISCHE PATENTSCHRIFT

(11) **EP 2 958 810 B1**
(45) Veröffentlichungstag und Bekanntmachung des Hinweises auf die Patenterteilung: **16.05.2018**
(21) Anmeldenummer: 14704754.2
(22) Anmeldetag: 15.02.2014
(51) Int. Cl.: B65D 1/02, B29C 49/02, B29C 49/04, B29C 49/06, B29C 49/12, B29C 49/42, B29C 49/54, B29C 49/48, B29C 49/70, B29K 67/00, B29B 11/08

(54) **STRECKGEBLASENER KUNSTSTOFFBEHÄLTER UND STRECKBLASVERFAHREN**
STRETCH-BLOW MOULDED PLASTIC CONTAINER AND STRETCH-BLOW MOULDING METHOD
RÉCIPIENT EN MATIÈRE PLASTIQUE PRODUIT PAR ÉTIRAGE-SOUFFLAGE ET PROCÉDÉ D'ÉTIRAGE-SOUFFLAGE

(30) Priorität: 22.02.2013 CH 5002013
(43) Veröffentlichungstag der Anmeldung: 30.12.2015
(73) Patentinhaber: Alpla Werke Alwin Lehner GmbH & Co. KG, 6971 Hard (AT)
(72) Erfinder: KOENIG, Helmut, AT-6972 Fussach (AT)
(74) Vertreter: Bohest AG Branch Ostschweiz
(86) Internationale Anmeldenummer: PCT/EP2014/000422
(87) Internationale Veröffentlichungsnummer: WO 2014/127901

(56) Entgegenhaltungen:
- EP-A1- 1 403 028
- EP-A1- 1 488 911
- FR-A1- 2 950 282
- GB-A- 2 131 344
- US-A1- 2012 118 849

## Beschreibung

Die Erfindung betrifft einen in einem Streckblasverfahren hergestellten Kunststoffbehälter gemäss dem Oberbegriff des Patentanspruchs 1. Die Erfindung betrifft auch ein Streckblasverfahren zur Herstellung eines derartigen Kunststoffbehälters gemäss dem Oberbegriff des unabhängigen Verfahrensanspruchs.

Eine grosse Zahl der heutzutage eingesetzten Kunststoffflaschen und dergleichen Kunststoffbehälter wird in einem Streckblasverfahren hergestellt. Bei diesem Verfahren wird ein sogenannter Preform von üblicherweise länglicher, röhrchenartiger Gestalt, der an seinem einen Längsende einen Boden und am anderen Längsende einen Halsabschnitt aufweist, erwärmt in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach dem Reck-/Blasvorgang wird der fertige Kunststoffbehälter aus der Blasform entformt.

Der Preform wird vor dem Streckblasprozess üblicherweise in einem separaten Spritzgiessverfahren hergestellt. Die Preforms können auch in einem Fliesspressverfahren oder auch durch Extrusionsblasen hergestellt werden. Im sogenannten Einstufen-Streckblasprozess wird der Preform ohne dazwischen geschaltete Abkühlung und Lagerung unmittelbar nach seiner Herstellung zu einem Kunststoffbehälter umgeformt. Meist jedoch werden die Kunststoffbehälter in einem zweistufigen Verfahren hergestellt, bei dem in einem separaten Verfahren zunächst die Preforms hergestellt, abgekühlt und für die spätere Verwendung zwischengelagert werden. Die Herstellung der Kunststoffbehälter erfolgt räumlich und zeitlich getrennt in einem separaten Streckblasprozess. Bei diesem späteren Streckblasprozess werden die Preforms wieder erwärmt, um daraus Kunststoffflaschen herzustellen. Beispielsweise wird dazu mit Hilfe von Infrarotstrahlung über die axiale und/oder radiale Erstreckung des Preforms ein gewünschtes Temperaturprofil eingestellt, welches für den Streckblasprozess erforderlich ist. Nach dem Einsetzen des Preforms in das Formwerkzeug wird dieser mittels eines mit Überdruck eingeblasenen Gases radial und auch axial ausgeformt und dabei mit einer Reckstange in axiale Richtung verstreckt. Danach wird der fertige Kunststoffbehälter entformt.

Eine grosse Anzahl der bekannten Preforms weist einen Supportring auf, der den länglichen Preformkörper vom Halsabschnitt trennt. Der Supportring weist üblicherweise einen Aussendurchmesser auf, der wenigstens 0,5 mm bis 1 mm grösser ist als der Öffnungsdurchmesser des Halsabschnitts des Preforms, und dient zum Transport des Preforms. Die Preforms werden nach ihrer Herstellung üblicherweise in grossen Gebinden, wie z.B. Kartons, Säcken, Gitterboxen, Oktabins, etc., ungeordnet abgefüllt und transportiert. Für die Weiterverarbeitung im Streckblasverfahren werden die Preforms aus den Gebinden in einen einer Streckblasvorrichtung vorgelagerten Trichter gefüllt und vereinzelt. Durch den Trichter gelangen die Preforms meist auf ein Steigband, mittels dem sie in kleinen Mengen diskontinuierlich oder kontinuierlich zu einem Rollensortierer transportiert werden. Im Rollensortierer richten sich die Preforms entsprechend ihrem Schwerpunkt derart aus, dass sie in einem Schlitz hängend, mit dem Preformkörper nach unten weisend, einzeln der Streckblasvorrichtung entgegen rutschen. Die bekannten Preforms werden über den Supportring oder einen vergleichbaren radialen Vorsprung zwischen dem Halsabschnitt und dem Preformkörper im Rollensortierer gehalten. Liegt der Schwerpunkt des Preforms klar unterhalb des Supportrings bzw. des radialen Vorsprungs im Bereich des Preformkörpers, so richten sich die Preforms korrekt aus und verlassen den Rollensortierer mit dem Preformkörper nach unten weisend. Je näher der Schwerpunkt der Preforms zu dem Supportring bzw. dem radialen Vorsprung liegt, desto grösser ist die Gefahr, dass derartige Preforms eine fehlerhafte Lage einnehmen können. Dies kann insbesondere auch bei Preforms mit einem grossen Öffnungsdurchmesser und langen Aussengewinden sowie mit einem kleinen leichten Preformkörper zu grossen Problemen führen. Vielfach sind daher am Ausgang des Rollensortierers Einrichtungen vorgesehen, mit denen die korrekte Ausrichtung der Preforms überprüft werden kann. Falsch ausgerichtete Preforms werden ausgeschieden und erneut dem Rollensortierer zugeführt. Ist die Anzahl der fehlerhaft ausgerichteten Preforms jedoch zu gross, kollabieren die meisten Sortiersysteme.

In der Streckblasvorrichtung stützt sich der bekannte Preform über den Supportring am Formwerkzeug ab, so dass nur der Preformkörper in die Formkavität ragt. Der oberhalb des Supportrings befindliche Halsabschnitt wird üblicherweise beim Streckblasprozess nicht mehr verändert.

Am fertig streckgeblasenen Kunststoffbehälter erweist sich der Supportring jedoch oft als störend, da er den Behälterhals radial dominant überragt und so die Freiheitsgrade bezüglich des Designs des Kunststoffbehälters und/oder von Verschlussaufsätzen für den Kunststoffbehälter stark beeinträchtigen kann. Andererseits besteht jedoch der Wunsch, auch Kunststoffbehälter beispielsweise für Körperpflege- oder Kosmetikanwendungen, die bisher üblicherweise in einem Extrusionsblasverfahren aus einem kontinuierlich oder diskontinuierlich extrudierten Kunststoffschlauch aufgeblasen werden, in einem Streckblasverfahren herzustellen. Dies deshalb, weil das Streckblasverfahren eine kostengünstige Verarbeitung von Polyethylenterephthalat (PET) ermöglicht. Aus PET hergestellte Kunststoffbehälter kommen optisch und haptisch Glasbehältern am nächsten. Die Verarbeitung von PET im Streckblasverfahren erlaubt die Herstellung von Kunststoffbehältern mit sehr geringen Wandstärken, die aber infolge der dem Werkstoff PET eigenen Streckverfestigung immer noch die erforderlichen Festigkeiten aufweisen. Das Streckblasverfahren ermöglicht relativ hohe Gesamtstreckverhältnisse, die als das Produkt des Längsstreckverhältnisses und des Radialstreckverhältnisses definiert sind. Für PET erweisen sich dabei Gesamtstreckverhältnisse von 8 - 14 als vorteilhaft für die Gleichmässigkeit der Wandstärkenverteilung und für die Festigkeit der im Streckblasverfahren hergestellten Kunststoffbehälter.

Oft besteht auch der Wunsch nach Kunststoffbehältern, die einen möglichst langen Behälterkörper besitzen, gleichzeitig jedoch einen Behälterhals mit einem relativ kleinen Öffnungsdurchmesser aufweisen. Bisher behilft man sich in solchen Fällen damit, den unterhalb des Supportrings befindlichen Preformkörper bereits entsprechend lange auszubilden. Infolge des langen Preformkörpers befindet sich der Schwerpunkt des Preforms unterhalb des Supportrings im Preformkörper und steht genügend Material für die Herstellung des Kunststoffbehälters im Streckblasprozess zur Verfügung. Andererseits kann der längere Preformkörper jedoch dazu führen, dass der Preformkörper in Längsrichtung nur mehr unzureichend verstreckt wird. Dadurch kann der gesamte Streckblasprozess instabil werden, und als Folge daraus können die erzielbaren Wandstärken im Behälterkörper nicht mehr reproduzierbar sein. Um diesem Problem entgegen zu wirken, werden auch Preforms mit kleinen Öffnungsdurchmessern mit Supportringen versehen, deren Aussendurchmesser deutlich grösser ist als der Öffnungsdurchmesser des Halsabschnitts des Preforms. Beispielsweise ist der Aussendurchmesser des Supportrings um 2,5 mm bis 24 mm grösser als der Öffnungsdurchmesser des Halsabschnitts. Dies ermöglicht es, den Preformköper mit einem grösseren Körperdurchmesser auszubilden und gleichzeitig mit einer geringeren axialen Länge zu versehen, damit beim Streckblasverfahren wieder ein ausreichend grosses Längsstreckverhältnis erzielbar ist. Dadurch ist sichergestellt, dass sich der Schwerpunkt des Preforms unterhalb des Supportrings befindet und dass für den Streckblasprozess genügend Kunststoffmaterial unterhalb des Supportrings zur Verfügung steht.

Am fertig streckgeblasenen Kunststoffbehälter erweist sich der einen grossen Aussendurchmesser aufweisende Supportring vielfach als störend. Er überragt den Behälterhals radial dominant und kann so die Freiheitsgrade bezüglich des Designs des Kunststoffbehälters und/oder von Verschlussaufsätzen für den Kunststoffbehälter stark beeinträchtigen.

Streckgeblasene Kunststoffbehälter nach dem Oberbegriff des Anspruchs 1 und Streckblasverfahren zu deren Herstellung werden in EP1403028, EP1488911, GB2131344, FR2950282 und US2012118849 offenbart.

Aufgabe der vorliegenden Erfindung ist es daher, den geschilderten Problemen der im Streckblasverfahren hergestellten Kunststoffbehälter des Stands der Technik abzuhelfen. Ein Streckblasverfahren soll dahingehend modifiziert werden, dass damit Kunststoffbehälter herstellbar sind, deren Supportringe die Montage von Verschlussaufsätzen oder dergleichen nicht behindern und möglichst grosse Freiheiten hinsichtlich des Behälterdesigns erlauben. Dabei sollen Preforms mit Supportringen verarbeitbar sein, die im Preformkörper ausreichend Kunststoffmaterial aufweisen, damit deren Schwerpunkt im Preformkörper angeordnet ist. Es sollen Kunststoffbehälter herstellbar sein, die auch bei kleinen Öffnungsdurchmessern des Behälterhalses einen langen Behälterkörper besitzen können. Dabei soll der Kunststoffbehälter ein ausreichend grosses Längsstreckverhältnis und eine reproduzierbare Wandstärkenverteilung aufweisen. Der den Behälterhals vom Behälterkörper trennende Supportring soll den Kunststoffbehälter nicht dominieren und soll hinsichtlich dessen Designs des Kunststoffbehälters kein Hindernis darstellen.

Die Lösung dieser und noch weiterer Aufgaben besteht in einem in einem streckgeblasenen Kunststoffbehälter, insbesondere einer Kunststoffflasche, welche die in Patentanspruch 1 aufgelisteten Merkmale aufweist. Ein erfindungsgemässes Streckblasverfahren für solch einen Kunststoffbehälter zeichnet sich durch die im unabhängigen Verfahrensanspruch aufgelisteten Verfahrensschritte aus. Weiterbildungen und/oder vorteilhafte Ausführungsvarianten der Erfindung sind Gegenstand der jeweiligen abhängigen Patentansprüche.

Durch die Erfindung wird ein streckgeblasener Kunststoffbehälter mit einem Behälterkörper, der mit einem Behälterboden verschlossen ist und mit einem über einen Schulterbereich an den Behälterkörper anschliessenden Behälterhals, der eine Behälteröffnung aufweist, geschaffen. Der Behälterkörper und der Behälterhals sind durch einen im wesentlichen radial abragenden, wenigstens bereichsweise umlaufenden Supportring voneinander getrennt, der eine Supportringunterseite aufweist. Der Schulterbereich weist einen in unmittelbarer Nachbarschaft zur Supportringunterseite verlaufenden ersten Schulterabschnitt und einen einstückig mit dem ersten Schulterabschnitt verbundenen zweiten Schulterabschnitt auf, der im wesentlichen radial an den Supportring anschliesst.

Ein im Wesentlichen die Umgebungstemperatur aufweisender Preform wird in einem eines Wärmeofens auf eine vorbestimmte Temperatur erwärmt. Dabei kann über die über die axiale Erstreckung des Preformkörpers ein Erwärmungsprofil eingeprägt werden. Anschließend wird der Preform in ein Blasformwerkzeug mit einer Formkavität verlagert, welche die Form des herzustellenden Kunststoffbehälters besitzt. In dem Blasformwerkzeug wird der Preform zu einer Kunststoffflasche oder einem Kunststoffbehälter streckgeblasen. Aus dem Stand der Technik ist bekannt, dass die Unterseite des Supportrings auf dem Blasformwerkzeug aufsitzt und entsprechend nur der Preformkörper in die Formkavität ragt. Zur Erzeugung des vorgeschlagenen Kunststoffbehälters wird jedoch der Preformkörper oberhalb des Supportrings durch das Blasformwerkzeug gehalten, so dass auch der Supportring in die Formkavität ragt. Während des Streckblasprozesses wird ein Schulterbereich ausgeformt, der einen ersten Schulterabschnitt, der in unmittelbarer Nachbarschaft zur Supportringunterseite verläuft und einen einstückig daran anschliessenden zweiten Schulterabnitt aufweist, der im wesentlichen radial an den Supportring anschliesst. Wegen der Temperatur des Preforms im Halsbereich verläuft der erste Schulterabschnitt in seiner Ausrichtung zunächst unverändert in Richtung des Behälterbodens und erstreckt sich dann radial im wesentlichen parallel zur Supportringunterseite, um dann in einer ansteigenden Stufe in den zweiten Schulterabschnitt überzugehen. Der zweite Schulterabschnitt schliesst radial an den peripheren Rand des Supportrings an und erstreckt sich entlang der Formkavität bis zum Behälterkörper. Die Biegung oder Verformung des ersten Schulterbereichs erfolgt ausgehend von ihrer Erstreckung in Richtung des Behälterbodens hin über die ansteigende Stufe hin zum zweiten Schulterabschnitt, der sich radial weiter erstreckt und an eine Innenwandung der Formkavität angrenzt. Der Ausbildung des ersten Schulterbereichs erfolgt somit nicht werkzeuggeführt oder durch die Kavität beeinflusst. Wegen des Temperaturunterschieds zwischen dem Supportring und dem Material unterhalb des Supportrings verbindet sich der ausgeformte erste Schulterabschnitt nicht stoffschlüssig mit dem Supportring. Die Verformung des ersten Schulterabschnitts ist unabhängig von der späteren Ausgestaltung der Flasche oder des Behälters, so dass auch Flaschen mit einem schrägen Hals, sogenannte Schräghalsflaschen, einen derart ausgebildeten ersten Schulterabschnitt aufweisen können. Bei Schräghalsflaschen schließen eine erste Mittelachse des Behälterhalses mit dem Supportring und eine zweite Mittelachse des Behälterkörpers einen spitzen Winkel ein.

Bei dem erfindungsgemässen Kunststoffbehälter ist der Supportring überblasen und kann mit dem Schulterbereich praktisch eine Einheit bilden, so dass der zweite Schulterabschnitt radial an den Supportring anschliessen kann. Der sonst bei den bekannten Kunststoffbehältern dominant vom Behälterhals abragende Supportring kann somit einen Bestandteil des Schulterbereichs des Kunststoffbehälters bilden. Ein bei den Behältern des Stands der Technik normalerweise zwischen dem Supportring und der Behälterschulter verlaufender Abschnitt des Behälterhalses wird zu einem ersten Schulterabschnitt umgeformt und geht somit unmittelbar in die Behälterschulter über. Dabei bildet der erste Schulterabschnitt ein eigenständiges Wandungsteil und ist nicht stoffschlüssig mit der Supportringunterseite verbunden. Er kann einen geringen Abstand von der Supportringunterseite aufweisen oder auch unmittelbar an diese angrenzen. Eine dem Mündungsrand des Behälters zugewandte Aussenfläche des Supportrings kann dabei im wesentlichen bündig mit einer Oberseite der Behälterschulter ausgebildet sein. Beim Streckblasprozess wird dabei ein an den Supportring anschliessender Abschnitt des Preformkörpers im wesentlichen derart verstreckt, dass er im wesentlichen korrespondierend zu einer Kontur einer Unterseite des Supportrings und/oder korrespondierend zu einer axialen Begrenzungsfläche des Supportrings verläuft. Das im Streckblasprozess aus dem Preformkörper verstreckte Material kann den Supportring wenigstens an dessen Unterseite und dessen radialer Peripherie umgeben, ohne dabei stoffschlüssig mit dem Supportring verbunden zu sein. Die axiale Erstreckung des Behälterhalses ist bei einem derartigen Kunststoffbehälter im allgemeinen durch den Supportring begrenzt.

Durch die erfindungsgemässe Ausbildung des Kunststoffbehälters stellt der Supportring für die Montage eines Verschluss- und/oder Ausgiessaufsatzes kein Hindernis mehr dar. Indem der Supportring praktisch in den Behälterkörper integriert ist, spielt sein radialer Überstand gegenüber dem Behälterhals keine Rolle. Dadurch können Kunststoffbehälter hergestellt werden, die einen Behälterhals mit einem sehr kleinen Durchmesser besitzen, jedoch einen sehr langen Behälterkörper aufweisen. Da der radiale Überstand des Supportrings am fertig streckgeblasenen Kunststoffbehälter praktisch keine Rolle mehr spielt, können für die Herstellung derartiger Kunststoffbehälter Preforms verwendet werden, die einen entsprechend durchmesserkleinen Preformhals aufweisen, jedoch mit einem Supportring ausgestattet sind, der einen sehr grossen radialen Überstand aufweist. Dies erlaubt es, einen Preformkörper anzuschliessen, der sich in der Länge nicht von den üblichen Preformkörper unterscheidet, jedoch einen deutlich grösseren Aussendurchmesser aufweist. Entsprechend ist im Preformkörper auch viel mehr Kunststoffmaterial enthalten, welches für den anschliessenden axialen und radialen Streckvorgang zur Verfügung steht. Dadurch sind auch bei Kunststoffbehältern mit kleinen Halsdurchmessern und langen Behälterkörpern optimale Längsstreckverhältnisse und Gesamtstreckverhältnisse erzielbar.

Je nach der Ausbildung der Formkavität des Blasformwerkzeugs kann der Schulterbereich einen geringen radialen Abstand vom Supportring aufweisen, so dass der Schulterbereich am Übergang vom Supportring zur Schulter eine vorzugsweise umlaufende Nut aufweist. Zu diesem Zweck kann am korrespondierenden Abschnitt der Blasform ein vorzugsweise ringförmig umlaufender Vorsprung vorgesehen sein. Alternativ kann der Schulterbereich im wesentlichen übergangslos an den Supportring anschliessen. Unter im wesentlichen übergangslos ist dabei ein Übergang zu verstehen, bei dem vom Supportring zum Schulterbereich noch eine kleine Stufe im Sinne eines axialen Abstands erkennbar ist. Die Stufe kann dabei in Richtung des Mündungsrands oder in Richtung des Behälterbodens verlaufen. In einer weiteren Ausführungsvariante des erfindungsgemässen Kunststoffbehälters kann der Supportring integral mit dem Schulterbereich ausgebildet sein. In diesem Fall ist am Übergang der Oberseite des Supportrings zur Aussenwandung der Behälterschulter keine Stufe mehr erkennbar. Der Supportring und der Schulterabschnitt sind allenfalls noch durch eine unterschiedliche Wandstärke und Materialdichte unterscheidbar.

Eine Variante der erfindungsgemässen streckgeblasenen Kunststoffbehälters kann vorsehen, dass der Behälterhals eine vom Supportring zu einem die Behälteröffnung umgebenden Mündungsrand gemessene axiale Erstreckung aufweist, die gleich oder grösser ist als 2 mm. Derartige Kunststoffbehälter mit relativ kurzen Behälterhälsen sind insbesondere für die Verwendung im Körperpflege- und Kosmetikbereich vorgesehen, in denen noch spezielle Verschluss- und Ausgiessaufsätze auf den Behälterkörper und Behälterhals montiert werden.

Zweckmässigerweise weist der streckgeblasene Kunststoffbehälter an seinem Behälterhals wenigstens eine wenigstens bereichsweise umlaufende Strukturierung auf. Diese dient dazu, den Kunststoffbehälter bzw. einen Preform, aus dem der Kunststoffbehälter streckgeblasen wird, an einem Blasformwerkzeug formschlüssig festzulegen. Dabei wirkt die Strukturierung am Behälterhals bzw. am Preformhals mit korrespondierend ausgebildeten Haltemitteln am Blasformwerkzeug zusammen.

In einer Ausführungsvariante der Erfindung weist der streckgeblasene Kunststoffbehälter an seinem Behälterhals eine Strukturierung in Form eines im wesentlichen radial abragenden Vorsprungs auf. Der radiale Vorsprung dient zur Abstützung des Preforms bzw. des Kunststoffbehälters an einer Auflage des Blasformwerkzeugs einer Streckblasvorrichtung. Am fertig streckgeblasenen Kunststoffbehälter kann der radiale Vorsprung zur Montage eines Verschlussaufsatzes bzw. eines Ausgiessaufsatzes dienen. Zweckmässigerweise weist der radial abragende Vorsprung eine radiale Erstreckung auf, die 0,5 mm bis 15 mm beträgt. Der radiale Vorsprung kann entlang der axialen Erstreckung des Behälterhalses vorgesehen sein. In einer weiteren Ausführungsvariante kann der radiale Vorsprung sich auch im Bereich des Mündungsrandes des Behälterhalses befinden. Abgesehen von einem radialen Vorsprung kann die am Halsabschnitt ausgebildete Strukturierung auch noch unterschiedliche Formgebungen aufweisen, die je nach Bedarf und Zweck als nutenartige Vertiefungen oder Überstände oder Gewindeabschnitte oder Bajonettkonturen etc. ausgebildet sein können.

Als Materialien für den streckgeblasenen Kunststoffbehälter kommen alle für das Spritzblas- und Streckblasverfahren geeigneten Materialien in Frage. Beispielsweise sind dies PET, PET-G, HDPE, PP, PS, PVC, Copolymere der angeführten Kunststoffe, Biokunststoffe, wie beispielsweise PEF, gefüllte Kunststoffe und Mischungen der genannten Kunststoffe. Der Kunststoff bzw. das Kunststoffgemisch können Additive, Katalysatoren, Trenn- und Gleitmittel sowie Farbstoffe enthalten. Vorzugsweise ist der Preform in einem Spritzgiessverfahren oder auch in einem Fliesspressverfahren aus PET hergestellt. Hierbei ist es unerheblich, ob alle Bestandteile der Kunststoffe oder der Kunststoffgemische oder lediglich ein Teil dieser Bestandteile aus nachwachsenden Rohstoffen gewonnen werden und der verbleibende Teil der Bestandteile beispielsweise petrochemisch gewonnen wird.

In einer Ausführungsvariante der Erfindung besteht der streckgeblasene Kunststoffbehälter aus Polyethylenterephthalat. Für das Erreichen einer möglichst reproduzierbaren Wandstärkenverteilung im Behälterkörper erweist es sich als zweckmässig, wenn der Kunststoffbehälter gegenüber einem Preform, aus dem er hergestellt ist, ein Längsstreckverhältnis aufweist, das gleich oder grösser ist als 1,8.

In einer weiteren Variante der Erfindung weist der Behälterkörper des streckgeblasenen Kunststoffbehälters einen von der Kreisform abweichenden Querschnitt auf. Beispielsweise kann dieser oval, elliptisch oder auch mehreckig ausgebildet sein, wobei die "Ecken" jeweils mit einem Radius ausgebildet sind.

Ein Streckblasverfahren zur Herstellung eines erfindungsgemässen Kunststoffbehälters unterscheidet sich von den konventionellen Streckblasverfahren dadurch, dass ein Preform, der einen länglichen Preformkörper aufweist, dessen eines Längsende mit einem Preformboden verschlossen ist und an dessen anderes Längsende ein Preformhals anschliesst, wobei der Preformkörper und der Preformhals durch einen im wesentlichen radial abragenden Supportring voneinander getrennt sind, der wenigstens bereichsweise umlaufend ausgebildet ist, derart in eine Formkavität eines Blasformwerkzeugs eingesetzt wird, dass sich der Supportring innerhalb der Formkavität befindet. Danach wird der Preformkörper mittels eines Reckdorns axial gereckt und durch ein mit Überdruck eingeblasenes Gas derart axial und radial aufgeweitet, dass ein einen Schulterbereich des hergestellten Kunststoffbehälters bildender Abschnitt radial an den Supportring anschliesst. Der fertig streckgeblasene Kunststoffbehälter wird anschliessend aus dem Blasformwerkzeug entformt.

Indem der Supportring des Preforms einen Bestandteil des Behälterkörpers des daraus streckgeblasenen Kunststoffbehälters bildet, verliert er seine sonst das Design des Kunststoffbehälters dominierende und vielfach störende Rolle. Dadurch stellt der Supportring für die Montage eines Verschluss- und/oder Ausgiessaufsatzes auf den fertig streckgeblasenen Kunststoffbehälter kein Hindernis mehr dar. Es können Preforms verwendet werden, die einen durchmesserkleinen Preformhals aufweisen, jedoch mit einem Supportring ausgestattet sind, der einen sehr grossen radialen Überstand aufweist. Dies erlaubt es, einen Preformkörper anzuschliessen, der sich in der Länge nicht von den üblichen Preformkörper unterscheidet, jedoch einen deutlich grösseren Aussendurchmesser aufweist. Entsprechend ist im Preformkörper auch viel mehr Kunststoffmaterial enthalten, welches für den anschliessenden axialen und radialen Streckvorgang zur Verfügung steht. Ausserdem ist dadurch sichergestellt, dass der Schwerpunkt des Preforms im Preformkörper liegt, damit der Preform bei seiner Vereinzelung im Rollensortierer eine korrekte Lage einnimmt. Mit derartig ausgebildeten Preforms sind auch Kunststoffbehälter herstellbar, die einen kleinen Halsdurchmessern jedoch einen langen Behälterkörper aufweisen, und es können dabei optimale Längsstreckverhältnisse und Gesamtstreckverhältnisse erzielt werden.

Eine Verfahrensvariante kann vorsehen, dass der Preformkörper beim Streckblasverfahren derart radial aufgeweitet wird, dass der Supportring integral mit dem Schulterbereich ausgebildet wird.

Prinzipiell könnte der in das Blasformwerkzeug eingesetzte Preform kraftschlüssig oder mit Hilfe von in sein Inneres reichenden Haltemitteln im Blasformwerkzeug festgelegt werden. Der Supportring, der sich im Inneren der Formkavität befindet, steht für die Festlegung des Preforms ja nicht mehr zur Verfügung. Beispielsweise könnte der Preform mit seiner Öffnung nach unten weisend auf einem Reckdorn gehalten sein und von unten in die Formkavität des Blasformwerkzeugs eingesetzt werden. Zweckmässigerweise wird der Preform jedoch formschlüssig im Blasformwerkzeug gehalten.

In einer Ausführunsgvariante des erfindungsgemässen Streckblasverfahrens erfolgt die formschlüssige Festlegung des Preforms am Blasformwerkzeug über wenigstens eine, wenigstens bereichsweise am Behälterhals umlaufende Strukturierung, die mit korrespondierenden Haltemitteln am Blasformwerkzeug zusammenwirkt. In einer beispielsweisen Verfahrensvariante wird der Preform über einen im wesentlichen radial vom Preformhals abragenden Vorsprung gehalten, der sich an einer korrespondierenden Auflage am Blasformwerkzeug abstützt.

Die Entformung und Entnahme des streckgeblasenen Kunststoffbehälters aus der Formkavität des Blasformwerkzeugs kann beispielsweise mit Hilfe einer Vakuumvorrichtung, eines Spreizgreifers oder eines Zangengreifers erfolgen. Die Vakuumvorrichtung kann beispielsweise am Mündungsrand des Behälterhalses ansetzen. Der Spreizgreifer wird durch die Öffnung am Behälterhals eingefahren und aufgespreizt. Der Zangengreifer greift an der Aussenwandung des Behälterhalses an.

Weitere Vorteile und Merkmale ergeben sich aus der nachfolgenden Beschreibung eines Ausführungsbeispiels der Erfindung unter Bezugnahme auf die schematischen Zeichnungen in nicht massstabsgetreuer Darstellung:
- Fig. 1: zeigt einen in ein axial geschnitten dargestelltes Blasformwerkzeug eingesetzten Preform zur Erläuterung der Unterschiede des erfindungsgemässen Streckblasverfahrens zum Verfahren des Stands der Technik; und
- Fig. 2: zeigt eine perspektivische Ansicht eines axial geschnittenen behälterhalsseitigen Abschnitts eines nach dem erfindungsgemässen Streckblasverfahren hergestellten Kunststoffbehälters.

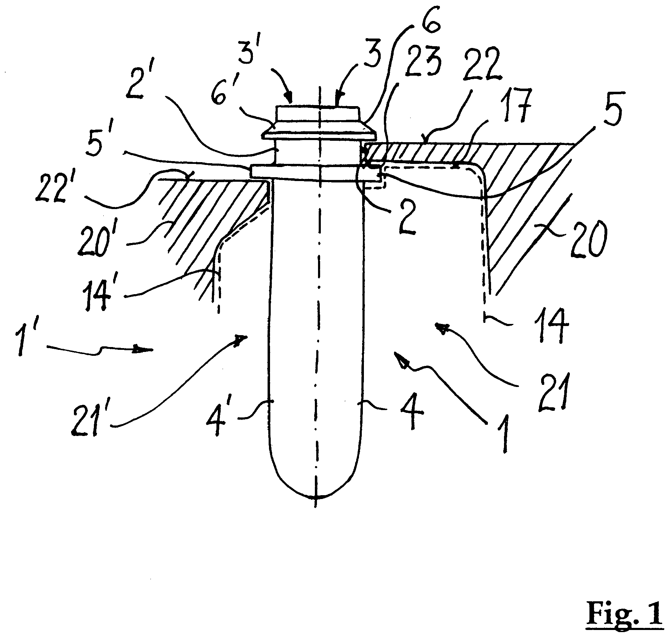

Die schematische Darstellung in Fig. 1 dient zur Erläuterung der Unterschiede des erfindungsgemäss modifizierten Streckblasverfahrens zu einem Streckblasverfahren des Stands der Technik. Insbesondere zeigt Fig. 1 dazu einen in ein Blasformwerkzeug eingesetzten Preform. Die linke Hälfte von Fig. 1 zeigt dabei die Verhältnisse beim Streckblasverfahren des Stands der Technik, während in der rechten Hälfte von Fig. 1 die Verhältnisse beim erfindungsgemässen Streckblasverfahren dargestellt sind. Gleiche Bestandteile bzw. Bauteile tragen jeweils das gleiche Bezugszeichen, wobei zur besseren Unterscheidung die Bezugszeichen des Streckblasverfahrens des Stands der Technik zusätzlich mit einem Apostroph "' " versehen sind.

Die linke Hälfte von Fig. 1 zeigt einen Preform 1', der für ein Streckblasverfahren des Stands der Technik in eine Formkavität 21' eines Blasformwerkzeugs 20' eingesetzt ist. Der Preform 1', der zuvor beispielsweise in einem Spritzgiessverfahren oder in einem Fliesspressverfahren hergestellt wurde, weist einen länglichen Preformkörper 4' auf, dessen eines Längsende verschlossen ausgebildet ist. Am anderen Längsende schliesst ein Preformhals 2' an, der eine Öffnung 3' aufweist. Der Preformkörper 4' und der Preformhals 2' sind durch einen sogenannten Supportring 5' voneinander getrennt. Der Supportring 5' erstreckt sich im wesentlichen radial und ist wenigstens bereichsweise umlaufend ausgebildet. Der in die Formkavität 21' des geschnitten angedeuteten Blasformwerkzeugs 20' eingesetzte Preform 1' stützt sich über seinen Supportring 5' an einer Auflage 22' des Blasformwerkzeugs 20' ab, so dass nur der Preformkörper 4' innerhalb der Formkavität 21' angeordnet ist. Der Supportring 5' selbst befindet sich ausserhalb der Formkavität 21'. Der Preformhals 2' überragt die Auflage 22' des Blasformwerkzeugs 20' und wird in der Regel beim Streckblasverfahren nicht weiter umgeformt. Der Preformhals 2' kann, wie angedeutet, mit einer oder mehreren Strukturierungen versehen sein. Beispielsweise ist diese Strukturierung, wie dargestellt, als ein im wesentlichen radial abragender, wenigstens teilweise umlaufender Vorsprung 6' ausgebildet. Die Strukturierungen können aber auch als nutenartige Vertiefungen, als Gewindeabschnitte, als vertiefte oder vorspringende Kontur eines Bajonettverschlusses usw. ausgebildet sein. Dabei können auch mehrere verschiedenartige Strukturierungen in Kombination vorliegen. Innerhalb der Formkavität 21' ist die Aussenkontur eines aufgeblasenen Behälterkörpers 14' strichliert angedeutet.

Die rechte Hälfte von Fig. 1 zeigt die Verhältnisse bei dem erfindungsgemässen Streckblasverfahren. Ein in eine Formkavität 21 eines Blasformwerkzeugs 20 eingesetzter Preform trägt gesamthaft das Bezugszeichen 1. Der Preform 1 weist einen länglichen Preformkörper 4 auf, dessen eines Längsende mit einem Preformboden verschlossen ist. Am anderen Längsende schliesst ein Preformhals 2 an, der eine Öffnung 3 aufweist. Der Preformkörper 4 und der Preformhals 2 sind durch einen im wesentlichen radial abragenden, zumindest teilweise umlaufenden Supportring 5 voneinander getrennt. Der Preform 1 stützt sich über einen Vorsprung 6, der im wesentlichen radial nach aussen vom Preformhals 2 abragt und zumindest teilweise umlaufend ausgebildet ist, an einer Auflage 22 des Blasformwerkzeugs 20 ab. Zum Unterschied von den in der linken Hälfte von Fig. 1 dargestellten Verhältnissen beim Streckblasverfahren des Stands der Technik befindet sich der Supportring 5 innerhalb der Formkavität 21 des Blasformwerkzeugs 20. Beispielsweise grenzt er hier an eine die Formkavität 21 begrenzende innere Wandung 23 des Blasformwerkzeugs 20 an. Beim anschliessenden axialen und radialen Aufblasen des Preformkörpers 4 wird der Supportring 5 derart überblasen, dass ein eine Behälterschulter 17 bildender Abschnitt an den Supportring 5 anschliesst. Die Behälterschulter 17 und ein Behälterkörper 14 des derart streckgeblasenen Kunststoffbehälters sind auf der rechten Hälfte von Fig. 1 strichliert angedeutet. Der aus der Formkavität 21 ragende Preformhals 2 und der davon radial abragende Vorsprung 6 werden beim Streckblasverfahren im allgemeinen nicht mehr verändert und bilden einen Behälterhals.

Nach dem axialen Strecken und radialen Aufblasen des Preformkörpers 1 zu dem Kunststoffbehälter wird dieser entformt. Die Entformung und Entnahme des streckgeblasenen Kunststoffbehälters aus dem Blasformwerkzeug 20 kann beispielsweise mit Hilfe einer Vakuumvorrichtung, eines Spreizgreifers oder eines Zangengreifers erfolgen. Die Vakuumvorrichtung kann beispielsweise an einem Mündungsrand des Behälterhalses oder am radial abragenden Vorsprung 6 ansetzen. Der Spreizgreifer wird durch die Öffnung am Behälterhals eingefahren und aufgespreizt. Der Zangengreifer greift an der Aussenwandung des Behälterhalses an.

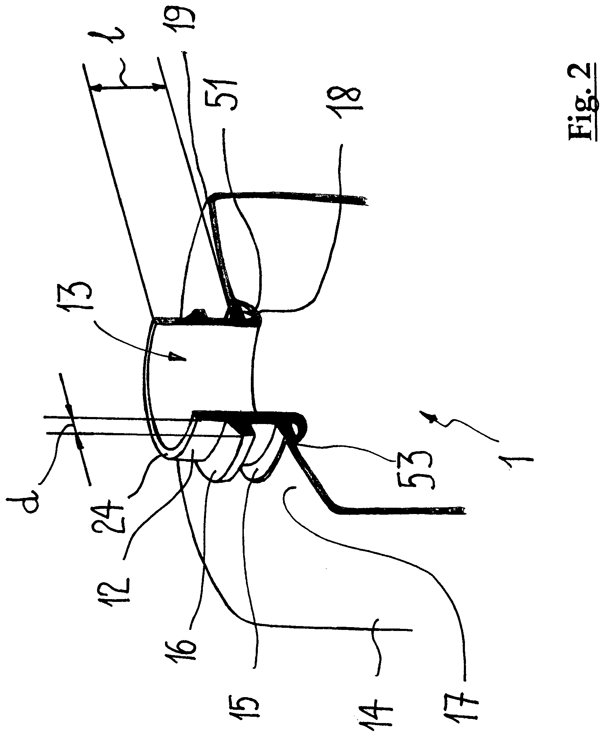

Fig. 2 zeigt eine perspektivische Ansicht eines axial geschnitten dargestellten streckgeblasenen Kunststoffbehälters 11 gemäss der Erfindung mit Sicht auf den Behälterhals 12 und die Behälteröffnung 13. Die Behälteröffnung 13 ist in axialer Richtung begrenzt durch einen Mündungsrand 24, der als Dichtfläche für einen hier nicht dargestellten Verschluss dienen kann. Die Behälterschulter 17 ist aus einem ersten Schulterabschnitt 18 und einem zweiten Schulterabschnitt 19 gebildet, die einstückig miteinander verbunden sind. Der erste Schulterabschnitt 18 grenzt an einer Supportringunterseite unmittelbar an den Behälterhals 12 an. Der erste Schulterabschnitt 18 erstreckt sich radial in unmittelbarer Nachbarschaft zur Supportringunterseite, ist mit dieser jedoch nicht stoffschlüssig verbunden. An einer radialen Peripherie 53 des Supportrings 5 geht der erste Schulterabschnitt 18 stufenförmig ansteigend in den zweiten Schulterabschnitt 19 über. Der zweite Schulterabschnitt 19 erstreckt sich radial im Anschluss an eine radiale Peripherie 53 des Supportrings 5 bis zum Behälterkörper 14. Zwischen der radialen Peripherie 53 des Supportrings 5 und dem zweiten Schulterabschnitt 19 kann ein umlaufender Spalt ausgebildet sein. In einem alternativen Ausführungsbeispiel kann der zweite Schulterabschnitt 19 unmittelbar an die radiale Peripherie 53 des Supportrings 5 anschliessen, so dass kein Spalt ausgebildet ist. Weiters kann der stufenförmige Anstieg des ersten Schulterabschnitts 18 derart ausgebildet sein, dass ein Übergang zum zweiten Schulterabschnitt 19 den Supportring 5 axial überragt, d.h. vom Mündungsrand 24 einen geringeren axialen Abstand aufweist als eine Oberseite des Supportrings 5.

In einer weiteren alternativen Ausführungsvariante kann der Supportring 15 stufenlos in die Behälterschulter 17 übergehen bzw. ist dieser integral mit der Behälterschulter 17 ausgebildet. An die Behälterschulter 17 schliesst der Behälterkörper 14 an. Der Behälterhals 12, der im wesentlichen bereits durch den Preformhals vorgegeben ist, erstreckt sich oberhalb des Supportrings 15. Er weist eine vom Supportring 15 zu einem Mündungsrand 24 der Behälteröffnung 13 gemessene axiale Länge 1 auf, die gleich oder grösser ist als 2 mm. Ein im wesentlichen radialer Vorsprung, der vom Behälterhals 12 abragt, weist eine radiale Erstreckung d auf, die 0,5 mm und mehr, und bis zu 15 mm betragen kann. Der radiale Vorsprung 16 kann, wie dargestellt, zwischen dem Supportring 15 und dem Mündungsrand der Behälteröffnung 13 angeordnet sein. Je nach Ausbildung des Preformhalses des Preforms, aus dem der Kunststoffbehälter 11 streckgeblasen ist, kann der Behälterhals 12 unterschiedlich ausgebildete Strukturierungen aufweisen. Anstelle des in Fig. 2 dargestellten radialen Vorsprungs 16 können diese Strukturierungen auch als nutenartige Vertiefungen, als Gewindeabschnitte, als vertiefte oder vorspringende Kontur eines Bajonettverschlusses usw. ausgebildet sein. Es können auch mehrere verschiedenartig ausgebildete Strukturierungen in Kombination vorliegen.

Bei dem erfindungsgemässen Kunststoffbehälter 11 ist der Supportring 15 überblasen und bildet mit dem Schulterbereich 17 praktisch eine Einheit. Der sonst bei den bekannten Kunststoffbehältern dominant vom Behälterhals abragende Supportring 15 bildet somit einen Bestandteil des Schulterbereichs 17 des Kunststoffbehälters 11. Dadurch stellt der Supportring 15 für die Montage beispielsweise eines Verschluss- und/oder Ausgiessaufsatzes kein Hindernis mehr dar. Indem der Supportring 15 praktisch in die Behälterschulter 17 integriert ist, spielt sein radialer Überstand gegenüber dem Behälterhals 12 keine Rolle. Dadurch können Kunststoffbehälter 11 hergestellt werden, die einen Behälterhals 12 mit einem sehr kleinen Durchmesser aufweisen, jedoch einen sehr langen Behälterkörper 14 aufweisen. Da der radiale Überstand des Supportrings 15 am fertig streckgeblasenen Kunststoffbehälter 11 praktisch keine Rolle mehr spielt, können für die Herstellung derartiger Kunststoffbehälter Preforms verwendet werden, die einen entsprechend durchmesserkleinen Preformhals aufweisen, jedoch mit einem Supportring ausgestattet sind, der einen sehr grossen radialen Überstand aufweist. Dies erlaubt es, einen Preformkörper anzuschliessen, der sich in der Länge nicht von den üblichen Preformkörper unterscheidet, jedoch einen deutlich grösseren Aussendurchmesser aufweist. Entsprechend ist im Preformkörper auch viel mehr Kunststoffmaterial enthalten, welches für den anschliessenden axialen und radialen Streckvorgang zur Verfügung steht. Dadurch sind auch bei Kunststoffbehältern 11 mit kleinen Halsdurchmessern und langen Behälterkörpern 14 optimale Längsstreckverhältnisse und Gesamtstreckverhältnisse erzielbar. Insbesondere wird bei der Verfahrensführung darauf geachtet, dass das Längsstreckverhältnis vorzugsweise gleich oder grösser ist als 1,8. Das Gesamtstreckverhältnis, welches als das Produkt aus dem Längsstreckverhältnis und dem Radialstreckverhältnis definiert ist, weist zweckmässigerweise einen Wert von 8 - 14 auf.

## Patentansprüche

1. Streckgeblasener Kunststoffbehälter mit einem Behälterkörper (14), der mit einem Behälterboden verschlossen ist, und mit einem über einen Schulterbereich (17) an den Behälterkörper (14) anschliessenden Behälterhals (12), der eine Behälteröffnung (13) aufweist, wobei der Behälterkörper (14) und der Behälterhals (12) durch einen im wesentlichen radial abragenden, wenigstens bereichsweise umlaufenden Supportring (15) voneinander getrennt sind, der eine in Richtung des Behälterbodens weisende Supportringunterseite (51) aufweist, **dadurch gekennzeichnet, dass** der Schulterbereich (17) einen ersten Schulterabschnitt (18) und einen einstückig mit dem ersten Schulterabschnitt (18) verbundenen zweiten Schulterabschnitt (19) aufweist, wobei der erste Schulterabschnitt (18) in seiner Ausrichtung zunächst unverändert in Richtung des Behälterbodens verläuft und sich dann radial im wesentlichen parallel zum Supportring (15) erstreckt, um dann in einer ansteigenden Stufe in den zweiten Schulterabschnitt (19) überzugehen, der im wesentlichen radial an den peripheren Rand des Supportrings (15) anschliesst.

2. Streckgeblasener Kunststoffbehälter gemäss Anspruch 1, **dadurch gekennzeichnet, dass** der erste Schulterabschnitt (18) an die Supportringunterseite (51) angrenzt.

3. Streckgeblasener Kunststoffbehälter gemäss einem der vorangehenden Ansprüche, **dadurch gekennzeichnet, dass** am Übergang vom Supportring (15) zum zweiten Schulterabschnitt (19) eine Stufe ausgebildet ist, an welcher der zweite Schulterabschnitt (19) den Supportring (15) axial überragt.

4. Streckgeblasener Kunststoffbehälter gemäss Anspruch 3, **dadurch gekennzeichnet, dass** der Supportring (15) in den Schulterbereich (17) eingebettet ist.

5. Streckgeblasener Kunststoffbehälter gemäss einem der vorangehenden Ansprüche, **dadurch gekennzeichnet, dass** der zweite Schulterabschnitt (19) wenigstens bereichsweise vom Supportring (15) beabstandet ist.

6. Streckgeblasener Kunststoffbehälter gemäss einem der Ansprüche 1-4, **dadurch gekennzeichnet, dass** der zweite Schulterabschnitt (19) im wesentlichen übergangslos an den Supportring (15) anschliesst.

7. Streckgeblasener Kunststoffbehälter gemäss einem der vorangehenden Ansprüche, **dadurch gekennzeichnet, dass** der Behälterhals (12) eine vom Supportring (15) zu einem die Behälteröffnung (13) umgebenden Mündungsrand gemessene axiale Erstreckung (1) aufweist, die gleich oder grösser ist als 2 mm.

8. Streckgeblasener Kunststoffbehälter nach einem der vorangehenden Ansprüche, **dadurch gekennzeichnet, dass** der Behälterhals (12) wenigstens eine wenigstens bereichsweise umlaufende Strukturierung aufweist, über welche der Kunststoffbehälter (11) an einem Blasformwerkzeug (20) festlegbar ist.

9. Streckgeblasener Kunststoffbehälter gemäss Anspruch 8, **dadurch gekennzeichnet, dass** die Strukturierung ein im wesentlichen radial abragender Vorsprung (16) ist.

10. Streckgeblasener Kunststoffbehälter gemäss Anspruch 9, **dadurch gekennzeichnet, dass** der radial abragende Vorsprung (16) eine radiale Erstreckung (d) aufweist, die 0,5 mm bis 15 mm beträgt.

11. Streckgeblasener Kunststoffbehälter nach einem der vorangehenden Ansprüche, **dadurch gekennzeichnet, dass** er aus Polyethylenterephthalat hergestellt ist und ein Längsstreckverhältnis aufweist, das gleich oder grösser ist als 1,8.

12. Streckgeblasener Kunststoffbehälter nach einem der vorangehenden Ansprüche, **dadurch gekennzeichnet, dass** der Behälterkörper (14) einen von der Kreisform abweichenden Querschnitt aufweist.

13. Streckblasverfahren zur Herstellung eines Kunststoffbehälters (11) gemäss einem der vorangehenden Ansprüche aus einem Preform (1), der einen länglichen Preformkörper (4) aufweist, dessen eines Längsende mit einem Preformboden verschlossen ist und an dessen anderes Längsende ein Preformhals (2) anschliesst, wobei der Preformkörper (4) und der Preformhals (2) durch einen im wesentlichen radial abragenden Supportring (5), der wenigstens bereichsweise umlaufend ausgebildet ist und eine Supportringunterseite (51) aufweist, voneinander getrennt sind, **dadurch gekennzeichnet, dass** der Preform (1) derart in eine Formkavität (21) eines Blasformwerkzeugs (20) eingesetzt wird, dass sich der Supportring (5) innerhalb der Formkavität (21) befindet, dass der Preformkörper (4) mittels eines Reckdorns axial gereckt und durch ein mit Überdruck eingeblasenes Gas derart axial und radial aufgeweitet wird, dass ein Schulterbereich (17) des hergestellten Kunststoffbehälters (11) ausgeformt wird, der einen ersten Schulterabschnitt (18) und einen einstückig damit verbundenen zweiten Schulterabschnitt (19) aufweist, wobei der erste Schulterabschnitt (18) derart umgeformt wird, dass er zunächst in Richtung des Behälterbodens verläuft und sich dann radial im wesentlichen parallel zur Supportringunterseite (51) erstreckt, um dann in einer ansteigenden Stufe in den zweiten Schulterabschnitt (19) überzugehen, der im wesentlichen radial an einen peripheren Rand des Supportrings (5; 15) anschliesst, und dass der fertig streckgeblasene Kunststoffbehälter (11) aus der Formkavität (21) des Blasformwerkzeugs (20) entformt wird.

14. Streckblasverfahren nach Anspruch 13, **dadurch gekennzeichnet, dass** der Preformkörper (4) derart radial aufgeweitet wird, dass der Supportring (5; 15) integral mit dem zweiten Schulterabschnitt (19) ausgebildet wird.

15. Streckblasverfahren nach Anspruch 13 oder 14, **dadurch gekennzeichnet, dass** der in die Formkavität (21) des Blasformwerkzeugs (20) eingesetzte Preform (1) formschlüssig gehalten wird.

16. Streckblasverfahren nach Anspruch 15, **dadurch gekennzeichnet, dass** die formschlüssige Festlegung des Preforms (1) am Blasformwerkzeug (20) über wenigstens eine, wenigstens bereichsweise am Preformhals (2) umlaufende Strukturierung erfolgt, die mit korrespondierenden Haltemitteln am Blasformwerkzeug (20) zusammenwirkt.

17. Streckblasverfahren nach Anspruch 16, **dadurch gekennzeichnet, dass** die formschlüssige Festlegung über einen im wesentlichen radial vom Preformhals (2) abragenden Vorsprung (6) erfolgt, der sich an einer korrespondierenden Auflage (22) des Blasformwerkzeugs (20) abstützt.

18. Streckblasverfahren nach einem der Ansprüche 13 - 17, **dadurch gekennzeichnet, dass** die Entformung und Entnahme des streckgeblasenen Kunststoffbehälters (11) aus der Formkavität (21) des Blasformwerkzeugs (20) mit Hilfe einer Vakuumvorrichtung, eines Spreizgreifers oder eines Zangengreifers erfolgt.

19. Streckblasverfahren nach einem der Ansprüche 13 - 18, **dadurch gekennzeichnet, dass** es sich um ein zweistufiges Streckblasverfahren handelt, bei dem ein in einem zeitlich und/oder räumlich getrennten gesonderten Herstellverfahren, beispielsweise in einem Spritzgiessverfahren, einem Fliesspressverfahren oder einem Extrusionsblasverfahren, gefertigter Preform zunächst wieder im erforderlichen Umfang erwärmt wird und daran anschliessend in einer Streckblasvorrichtung zu dem gewünschten Kunststoffbehälter streckgeblasen wird.

## Claims

1. Stretch-blow-moulded plastic container with a container body (14), which is closed by a container base, and with a container neck (12), which adjoins the container body (14) via a shoulder region (17) and has a container opening (13), the container body (14) and the container neck (12) being separated from one another by a supporting ring (15), which protrudes essentially radially, runs circumferentially in at least some regions and has a supporting ring underside (51) facing in the direction of the container base, **characterized in that** the shoulder region (17) has a first shoulder portion (18) and a second shoulder portion (19), which is connected in one piece to the first shoulder portion (18), the first shoulder portion (18) in its alignment running at first unchanged in the direction of the container base and then extending radially essentially parallel to the supporting ring (15), to then go over in a rising step into the second shoulder portion (19), which essentially radially adjoins the peripheral edge of the supporting ring (15).

2. Stretch-blow-moulded plastic container according to Claim 1, **characterized in that** the first shoulder portion (18) is adjacent to the supporting ring underside (51).

3. Stretch-blow-moulded plastic container according to one of the preceding claims, **characterized in that** at the transition from the supporting ring (15) to the second shoulder portion (19) there is formed a step at which the second shoulder portion (19) reaches axially beyond the supporting ring (15).

4. Stretch-blow-moulded plastic container according to Claim 3, **characterized in that** the supporting ring (15) is embedded in the shoulder region (17).

5. Stretch-blow-moulded plastic container according to one of the preceding claims, **characterized in that** the second shoulder portion (19) is kept at a distance from the supporting ring (15), at least in certain regions.

6. Stretch-blow-moulded plastic container according to one of Claims 1-4, **characterized in that** the second shoulder portion (19) adjoins the supporting ring (15) essentially seamlessly.

7. Stretch-blow-moulded plastic container according to one of the preceding claims, **characterized in that** the container neck (12) has an axial extent (1), measured from the supporting ring (15) to a mouth edge surrounding the container opening (13), which is equal to or greater than 2 mm.

8. Stretch-blow-moulded plastic container according to one of the preceding claims, **characterized in that** the container neck (12) has at least one structuring, which runs circumferentially in at least some regions and via which the plastic container (11) can be fixed on a blow-moulding tool (20) .

9. Stretch-blow-moulded plastic container according to Claim 8, **characterized in that** the structuring is an essentially radially protruding projection (16).

10. Stretch-blow-moulded plastic container according to Claim 9, **characterized in that** the radially protruding projection (16) has a radial extent (d), which is 0.5 mm to 15 mm.

11. Stretch-blow-moulded plastic container according to one of the preceding claims, **characterized in that** it is produced from polyethylene terephthalate and has a longitudinal stretching ratio which is equal to or greater than 1.8.

12. Stretch-blow-moulded plastic container according to one of the preceding claims, **characterized in that** the container body (14) has a non-circular cross section.

13. Stretch-blow-moulding method for producing a plastic container (11) according to one of the preceding claims from a preform (1), which has an elongated preform body (4), one longitudinal end of which is closed by a preform base and the other longitudinal end of which is adjoined by a preform neck (2), the preform body (4) and the preform neck (2) being separated from one another by an essentially radially protruding supporting ring (5), which runs circumferentially in at least some regions and has a supporting ring underside (51), **characterized in that** the preform (1) is inserted into a mould cavity (21) of a blow-moulding tool (20) in such a way that the supporting ring (5) is located inside the mould cavity (21), **in that** the preform body (4) is stretched axially by means of a stretching mandrel and is axially and radially expanded by a gas that is blown in with positive pressure in such a way as to form a shoulder region (17) of the produced plastic container (11) that has a first shoulder portion (18) and a second shoulder portion (19) connected in one piece thereto, the first shoulder portion (18) being reformed in such a way that it first runs in the direction of the container base and then extends radially essentially parallel to the supporting ring underside (51), to then go over in a rising step into the second shoulder portion (19), which essentially radially adjoins a peripheral edge of the supporting ring (5; 15), and **in that** the finished stretch-blow-moulded plastic container (11) is demoulded from the mould cavity (21) of the blow-moulding tool (20).

14. Stretch-blow-moulding method according to Claim 13, **characterized in that** the preform body (4) is radially expanded in such a way that the supporting ring (5; 15) is formed integrally with the second shoulder portion (19).

15. Stretch-blow-moulding method according to Claim 13 or 14, **characterized in that** the preform (1) inserted into the mould cavity (21) of the blow-moulding tool (20) is held in an interlocking manner.

16. Stretch-blow-moulding method according to Claim 15, **characterized in that** the interlocking fixing of the preform (1) on the blow-moulding tool (20) takes place by means of at least one structuring, which runs circumferentially in at least some regions on the preform neck (2) and interacts with corresponding holding means on the blow-moulding tool (20).

17. Stretch-blow-moulding method according to Claim 16, **characterized in that** the interlocking fixing takes place by means of a projection (6) that protrudes essentially radially from the preform neck (2) and is supported on a corresponding support (22) of the blow-moulding tool (20).

18. Stretch-blow-moulding method according to one of Claims 13-17, **characterized in that** the demoulding and removal of the stretch-blow-moulded plastic container (11) from the mould cavity (21) of the blow-moulding tool (20) is performed with the aid of a vacuum device, a spreading gripper or a pinching gripper.

19. Stretch-blow-moulding method according to one of Claims 13-18, **characterized in that** it is a two-stage stretch-blow-moulding method, in which a preform produced in a separate production process, separated in time and/or space, for example in an injection-moulding process, a flow-moulding process or an extrusion blow-moulding process, is first heated again to the required extent and is then stretch-blow-moulded in a stretch-blow-moulding device to form the desired plastic container.

## Revendications

1. Récipient en matière plastique produit par étirage-soufflage, comprenant un corps de récipient (14), qui est fermé par un fond de récipient, et comprenant un col de récipient (12) qui se raccorde au corps de récipient (14) par l'intermédiaire d'une zone d'épaule (17) et présente un orifice de récipient (13), le corps de récipient (14) et le col de récipient (12) étant séparés l'un de l'autre par un anneau support (15) qui avance de façon sensiblement radiale et s'étend de façon périphérique au moins dans certaines parties et qui présente une face inférieure d'anneau support (51) tournée en direction du fond de récipient, **caractérisé en ce que** la zone d'épaule (17) présente une première portion d'épaule (18) et une deuxième portion d'épaule (19) reliée d'une seule pièce à la première portion d'épaule (18), la première portion d'épaule (18) s'étendant dans son orientation d'abord de façon inchangée en direction du fond de récipient et s'étendant ensuite radialement, de façon sensiblement parallèle au bord périphérique de l'anneau support (15), pour se raccorder ensuite par un gradin ascendant à la deuxième portion d'épaule (19) qui est liée de façon sensiblement radiale au bord périphérique de l'anneau support (15).

2. Récipient en matière plastique produit par étirage-soufflage selon la revendication 1, **caractérisé en ce que** la première portion d'épaule (18) est adjacente à la face inférieure d'anneau support (51).

3. Récipient en matière plastique produit par étirage-soufflage selon une des revendications précédentes, **caractérisé en ce qu'**il est prévu, à l'endroit de la transition de l'anneau support (15) vers la deuxième portion d'épaule (19), un gradin où la deuxième portion d'épaule (19) dépasse axialement par rapport à l'anneau support (15).

4. Récipient en matière plastique produit par étirage-soufflage selon la revendication 3, **caractérisé en ce que** l'anneau support (15) est intégré dans la zone d'épaule (17).

5. Récipient en matière plastique produit par étirage-soufflage selon une des revendications précédentes, **caractérisé en ce que** la deuxième portion d'épaule (19) se situe au moins dans certaines zones à distance de l'anneau support (15).

6. Récipient en matière plastique produit par étirage-soufflage selon une des revendications 1 à 4, **caractérisé en ce que** la deuxième portion d'épaule (19) se raccorde sensiblement sans transition à l'anneau support (15).

7. Récipient en matière plastique produit par étirage-soufflage selon une des revendications précédentes, **caractérisé en ce que** le col de récipient (12) présente une dimension axiale (1), mesurée depuis l'anneau support (15) jusqu'à un bord d'embouchure entourant l'orifice de récipient (13), qui est égale ou supérieure à 2 mm.

8. Récipient en matière plastique produit par étirage-soufflage selon une des revendications précédentes, **caractérisé en ce que** le col de récipient (12) présente au moins une structuration qui est périphérique sur au moins une partie et par l'intermédiaire de laquelle le récipient en matière plastique (11) peut être fixé à un outil de moulage par soufflage (20).

9. Récipient en matière plastique produit par étirage-soufflage selon la revendication 8, **caractérisé en ce que** la structuration est une saille (16) avançant de façon sensiblement radiale.

10. Récipient en matière plastique produit par étirage-soufflage selon la revendication 9, **caractérisé en ce que** la saillie (16) avançant radialement présente une dimension radiale (d) qui est comprise entre 0,5 mm et 15 mm.

11. Récipient en matière plastique produit par étirage-soufflage selon une des revendications précédentes, **caractérisé en ce qu'**il est fabriqué en polyéthylène téréphtalate et présente un rapport d'allongement longitudinal qui est égal ou supérieur à 1,8.

12. Récipient en matière plastique produit par étirage-soufflage selon une des revendications précédentes, **caractérisé en ce que** le corps de récipient (14) présente une section transversale différente de la forme circulaire.

13. Procédé d'étirage-soufflage permettant de fabriquer un récipient en matière plastique (11) selon une des revendications précédentes, à partir d'une préforme (1) qui présente un corps de préforme (4) allongé dont une extrémité longitudinale est fermée par un fond de préforme et dont l'autre extrémité longitudinale se raccorde à un col de préforme (2), le corps de préforme (4) et le col de préforme (2) étant séparés l'un de l'autre par un anneau support (5) qui avance de façon sensiblement radiale et s'étend de façon périphérique au moins dans certaines parties et qui présente une face inférieure d'anneau support (51), **caractérisé en ce que** la préforme (1) est placée dans une cavité de moule (21) d'un outil de moulage par soufflage (20), de manière à ce que l'anneau support (5) se trouve à l'intérieur de la cavité de moule (21), **en ce que** le corps de préforme (4) est étiré axialement au moyen d'un mandrin d'étirage et est dilaté axialement et radialement par un gaz injecté sous pression, de manière à façonner, sur le récipient en matière plastique (11) fabriqué, une zone d'épaule (17) qui présente une première portion d'épaule (18) et une deuxième portion d'épaule (19) reliée d'un seul tenant à la première portion d'épaule (18), la première portion d'épaule (18) étant mise en forme de manière à s'étendre d'abord en direction du fond de récipient et à s'étendre ensuite radialement, de façon sensiblement parallèle à la face inférieure d'anneau support (51), pour se raccorder ensuite par un gradin ascendant à la deuxième portion d'épaule (19) qui se raccorde de façon sensiblement radiale à un bord périphérique de l'anneau support (5 ; 15), et **en ce que** le récipient en matière plastique (11) fini, produit par étirage-soufflage, est démoulé de la cavité de moule (21) de l'outil de moulage par soufflage (20).

14. Procédé d'étirage-soufflage selon la revendication 13, **caractérisé en ce que** le corps de préforme (4) est élargi radialement de façon telle que l'anneau support (5 ; 15) soit façonné d'une seule pièce avec la deuxième portion d'épaule (19).

15. Procédé d'étirage-soufflage selon la revendication 13 ou 14, **caractérisé en ce que** la préforme (1) mise en place dans la cavité de moule (21) de l'outil de moulage par soufflage (20) est maintenue par complémentarité de formes.

16. Procédé d'étirage-soufflage selon la revendication 15, **caractérisé en ce que** le maintien par complémentarité de formes de la préforme (1) sur l'outil de moulage par soufflage (20) s'effectue par l'intermédiaire d'au moins une structuration qui est périphérique sur au moins une partie du col de préforme (2) et coopère avec des moyens de fixation correspondants sur l'outil de moulage par soufflage (20).

17. Procédé d'étirage-soufflage selon la revendication 16, **caractérisé en ce que** le maintien par complémentarité de formes s'effectue par l'intermédiaire d'une saillie (6) qui avance de façon sensiblement radiale à partir du col de préforme (2) et prend appui sur un support (22) correspondant de l'outil de moulage par soufflage (20).

18. Procédé d'étirage-soufflage selon une des revendications 13 à 17, **caractérisé en ce que** le démoulage et le retrait du récipient en matière plastique (11), produit par étirage-soufflage, de la cavité de moule (21) de l'outil de moulage par soufflage (20) s'effectue à l'aide d'un dispositif permettant de faire le vide, d'un préhenseur expansible ou d'un préhenseur à pince.

19. Procédé d'étirage-soufflage selon une des revendications 13 à 18, **caractérisé en ce qu'**il s'agit d'un procédé d'étirage-soufflage à deux étapes, selon lequel une préforme réalisée par un procédé de fabrication distinct, séparé dans le temps et/ou dans l'espace, par exemple un procédé de moulage par injection, un procédé de formage par fluage ou un procédé d'extrusion-soufflage, est d'abord réchauffée jusqu'à la température nécessaire et est ensuite soumise à l'étirage-soufflage pour produire le récipient en matière plastique souhaité.
